# EUROPÄISCHE PATENTSCHRIFT

(11) **EP 3 117 734 B1**
(45) Veröffentlichungstag und Bekanntmachung des Hinweises auf die Patenterteilung: **14.08.2019**
(21) Anmeldenummer: 16177806.3
(22) Anmeldetag: 04.07.2016
(51) Int. Cl.: A44B 11/12, B60P 7/08

(54) **GURTSPANNER**
BELT TENSIONER
TENDEUR DE SANGLE

(30) Priorität: 03.07.2015 DE 202015103513 U; 11.12.2015 DE 202015106760 U
(43) Veröffentlichungstag der Anmeldung: 18.01.2017
(73) Patentinhaber: Franz Miederhoff oHG, 59846 Sundern (DE)
(72) Erfinder: PAPENHEIM, Joseph, 59846 Sundern (DE)
(74) Vertreter: Patentanwälte Dörner & Kötter PartG mbB

(56) Entgegenhaltungen:
- GB-A- 2 167 510
- GB-A- 2 284 854
- GB-A- 2 326 439
- US-A- 3 866 272

## Beschreibung

Gurtspanner sind aus dem Stand der Technik in unterschiedlichen Ausführungsformen bekannt. Sie dienen zum Beispiel dem Zweck, eine Plane eines Nutzfahrzeugaufbaus, insbesondere eines Lastkraftwagens, Sattelzugaufliegers oder Eisenbahnwaggons, zu verspannen. Ein Beispiel für einen derartigen Gurtspanner liefert die EP 0 906 732 A1. Dieser Gurtspanner weist einen Grundkörper mit einem Bodenabschnitt und zwei sich senkrecht zu diesem erstreckenden Seitenwangen auf. An dem Grundkörper ist ein Spannhebel angelenkt, der zwei abgekantete Seitenwangen sowie einen Gurtsteg aufweist, der sich zwischen den Seitenwangen erstreckt. Mittels eines Gelenkbolzens ist der Spannhebel mit den beiden Seitenwangen des Grundkörpers verbunden. Auf dem Gelenkbolzen ist eine Hülse angeordnet, die für eine Umlenkung des Spanngurtes vorgesehen ist. Als Verriegelungsmittel ist ein mit einer Federkraft beaufschlagter Bügel vorgesehen, der mittels einer Schraubenfeder in einer geschlossenen Verriegelungsstellung des Spannhebels gehalten wird, um den Spannhebel in der Verriegelungsstellung zu verriegeln. Aufgrund seines konstruktiven Aufbaus kann dieser Gurtspanner nicht sehr kompakt ausgeführt werden, was aber grundsätzlich wünschenswert wäre.

Aus der DE 10 2009 020 239 A1 ist ein Gurtspanner bekannt, der eine Verriegelungseinrichtung aufweist, die eine Federstange umfasst, die an der Innenseite des Spannhebels angeordnet ist und in der Verriegelungsstellung in eine Einrastnut eingreift, die in einer der beiden Seitenwangen des Grundkörpers ausgebildet ist. Dieser Gurtspanner weist den Nachteil auf, dass der Spannhebel nur durch eine Zwei-Hand-Betätigung der Federstange entriegelt werden kann.

Die DE 20 2013 102 606 U1 offenbart einen Gurtspanner der eingangs genannten Art, der die vorstehend genannten Nachteile überwindet und ein einfacheres Entriegeln des Spannhebels durch eine Ein-Hand-Betätigung ermöglicht. Das Federelement ist U-förmig gebogen ausgeführt und weist eine an der Innenseite des Spannhebels über dessen freien Ende hervorstehende Handhabe auf. Durch Ausüben eines Drucks auf die Handhabe kann das Federelement gegen dessen Vorspannung aus der Einrastnut herausgeführt werden. Der Spannhebel ist mit seinem Verriegelungsabschnitt durch eine langlochartige Durchbrechung der ersten Seitenwange des Spannhebels hindurchgeführt. Das dem Verriegelungsabschnitt gegenüberliegende Ende des Federelements ist an der zweiten Seitenwange an einer Federelementhalterung befestigt. Dieser vorbekannte Gurtspanner sorgt grundsätzlich für eine sichere Verriegelung des Spannhebels in der Verriegelungsstellung und ermöglicht darüber hinaus eine einfache Entriegelung des Spannhebels durch eine Ein-Hand-Betätigung des Federelements. Die Montage des U-förmigen Federelements ist allerdings relativ schwierig, da das Federelement mit einem Ende exakt in die Federelementhalterung eingefädelt werden muss. Darüber hinaus ist die Entriegelung des Gurtspanners mit einem recht hohen Kraftaufwand verbunden. Ein Gurtspanner der gattungsgemäßen Art ist darüber hinaus in der GB 2 284 854 A beschrieben.

Die vorliegende Erfindung macht es sich zur Aufgabe, einen Gurtspanner der eingangs genannten Art zur Verfügung zu stellen, der eine noch sicherere Verriegelung des Spannhebels an dem Grundkörper ermöglicht und dabei einfach in der Handhabung und Montage ist.

Die Lösung dieser Aufgabe liefert ein gattungsgemäßer Gurtspanner mit den Merkmalen des kennzeichnenden Teils des Anspruchs 1. Die Unteransprüche betreffen vorteilhafte Weiterbildungen der Erfindung.

Ein erfindungsgemäßer Gurtspanner zeichnet sich dadurch aus, dass das Federelement einen zweiten Verriegelungsabschnitt aufweist, der sich durch eine zweite Seitenwange des Spannhebels nach außen erstreckt, und dass die Verriegelungsmittel eine zweite Einrastnut umfassen, die in einer zweiten Seitenwange des Grundkörpers ausgebildet ist und in die der zweite Verriegelungsabschnitt in der Verriegelungsstellung des Spannhebels eingreift und darin zum Blockieren der Öffnungsbewegung des Spannhebels durch die mechanische Vorspannung des Federelements gehalten ist. Dadurch, dass das Federelement des erfindungsgemäßen Gurtspanners im Gegensatz zum Stand der Technik zwei Verriegelungsabschnitte aufweist, die sich durch die Seitenwangen des Spannhebels nach außen erstrecken und jeweils in eine der Einrastnuten eingreifen, wird in vorteilhafter Weise die Möglichkeit einer Doppelverriegelung des Gurtspanners geschaffen. Dadurch wird eine noch sicherere Verriegelung des Spannhebels an dem Grundkörper des Gurtspanners ermöglicht, die sich trotzdem durch eine Ein-Hand-Betätigung des Handhabungsabschnitts des Federelements mit einem relativ geringen Kraftaufwand freigeben lässt. Das Federelement ist in besonders vorteilhafter Weise werkzeuglos an einer in der Verriegelungsstellung dem Bodenabschnitt des Grundkörpers gegenüberliegenden Innenseite des Spannhebels anbringbar. Somit wird auch die Möglichkeit einer einfachen Nachrüstung beziehungsweise eines Austauschs des Federelements geschaffen. Vorzugsweise weist der Spannhebel eine sich von den Anbindungspunkten an den Grundkörper zum Handhabungsabschnitt verringernde Aufbauhöhe auf, so dass insgesamt ein Spannhebel mit geringer Aufbauhöhe von maximal 20 mm erhalten werden kann.

In einer bevorzugten Ausführungsform wird vorgeschlagen, dass in jeder der beiden Seitenwangen des Spannhebels jeweils eine langlochartig geformte Durchbrechung ausgebildet ist, durch die sich jeweils einer der Verriegelungsabschnitte des Federelements hindurch erstreckt. Diese Maßnahme ermöglicht insbesondere, dass keine spezielle Federelementhalterung, wie sie im Stand der Technik an der Innenseite des Spannhebels vorgesehen ist und in die ein freies Ende des Federelements eingesetzt ist, vorgesehen werden muss. Die Durchbrechungen verhindern in vorteilhafter Weise ein Herausfallen des Federelements aus dem Spannhebel. Überdies ermöglichen die langlochartig geformten Durchbrechungen eine sichere Führung einer Translationsbewegung der Verriegelungsabschnitte parallel zu einer Längsachse des Handhabungsabschnitts bei der Verriegelung beziehungsweise Entriegelung.

Bei einer in Umfangsrichtung umlaufenden, geschlossenen Ausgestaltung des Federelements, wie sie in einer besonders vorteilhaften Ausführungsform vorgesehen sein kann, ergeben sich Vorteile bei der Herstellung und Montage des Gurtspanners, da die Federelemente anders als zum Beispiel U-förmige Federelemente, die sich ineinander verhaken können, einfacher sortiert beziehungsweise vereinzelt werden können. Dieses wirkt sich positiv auf den Montageprozess aus.

Das Federelement weist einen ersten und einen zweiten Federschenkel auf, die sich an der Innenseite des Handhabungsabschnitts erstrecken. Dabei sind an der Innenseite des Handhabungsabschnitts des Spannhebels zwei Widerlager vorgesehen, an denen jeweils einer der beiden Federschenkel zur Erzeugung einer mechanischen Vorspannung anliegt. Mittels der beiden Widerlager wird in den beiden Federschenkeln eine mechanische Vorspannung erzeugt, die auf das gesamte Federelement und insbesondere auf die beiden Verriegelungsabschnitte einwirkt. Diese mechanische Vorspannung bewirkt unter anderem, dass die Verriegelungsabschnitte in der Entriegelungsstellung abschnittsweise an einem in Richtung des vorderen Endes des Handhabungsabschnitts weisenden Ende der langlochartigen Durchbrechungen anliegen. Vorzugsweise erstrecken sich die Federschenkel zumindest abschnittsweise orthogonal zur Längsachse des Handhabungsabschnitts.

Vorzugsweise kann der erste Federschenkel an einem an den ersten Verriegelungsabschnitt angrenzenden Bereich eine Kröpfung aufweisen, die so geformt ist, dass der erste Federschenkel in Längsrichtung des Handhabungsabschnitts einen Versatz zum zweiten Federschenkel aufweist und sich die beiden Federschenkel abschnittsweise parallel zueinander erstrecken. In einem Überlappungsbereich an ihren freien Enden können die Federschenkel abschnittsweise miteinander überlappen. Durch diese Überlappung wird eine Selbsthemmung der beiden Federschenkel erreicht, die sich vorteilhaft auf die mittels der Federschenkel im Zusammenwirken mit den Widerlagern erzeugbare mechanische Vorspannung auswirkt.

In einer weiteren vorteilhaften Ausführungsform besteht die Möglichkeit, dass das Federelement zwei sich abschnittsweise parallel zu den Innenseiten der Seitenwangen des Spannhebels erstreckende Halteabschnitte umfasst, wobei jeder der beiden Halteabschnitte eine Kröpfung aufweist, die sich von einer Innenseite des Handhabungsabschnitts weg erstreckt und an die sich jeweils einer der Verriegelungsabschnitte anschließt. Durch diese Maßnahme kann in vorteilhafter Weise ein Verklemmen des Federelements bei Schnee oder unter der Einwirkung von Verschmutzungen wirksam verhindert werden.

Vorzugsweise kann der erste Federschenkel an einem an den ersten Verriegelungsabschnitt angrenzenden Bereich eine Kröpfung aufweisen, die sich in Richtung der Innenseite des Handhabungsabschnitts erstreckt und so geformt ist, dass der erste Federschenkel in Längsrichtung des Handhabungsabschnitts einen Versatz zum zweiten Federschenkel aufweist.

In einer weiteren vorteilhaften Ausführungsform kann vorgesehen sein, dass der zweite Federschenkel an einem an den zweiten Verriegelungsabschnitt angrenzenden Bereich eine Kröpfung aufweist, die sich in Richtung der Innenseite des Handhabungsabschnitts erstreckt.

Die Widerlager sind integral mit dem Handhabungsabschnitt ausgebildet. Die Widerlager können insbesondere durch Stanzbiegen erhalten werden. Durch diese Maßnahme kann der Herstellungsprozess des Spannhebels vereinfacht werden, da die Widerlager keine separaten Bauteile sind, die aufwändig an der Innenseite des Handhabungsabschnitts montiert werden müssen.

Vorzugsweise sind die beiden Widerlager in Längsrichtung des Handhabungsabschnitts zueinander versetzt angeordnet, so dass ein erstes Widerlager mit dem ersten Federschenkel zusammenwirken kann und ein zweites Widerlager mit dem zweiten Federschenkel zusammenwirken kann.

In einer besonders bevorzugten Ausführungsform können sich die Widerlager schräg zu den Längsachsen der beiden Federschenkel erstrecken. Dadurch kann die Translationsbewegung der Verriegelungsabschnitte des Federelements bei der Entriegelung vereinfacht werden, da die Federschenkel ausreichend Spiel für eine Verformung in Längsrichtung des Handhabungsabschnitts und damit parallel zur Bewegungsrichtung der Verriegelungsabschnitte haben.

In einer weiteren vorteilhaften Ausführungsform wird vorgeschlagen, dass der Betätigungsabschnitt des Federelements eine in Richtung des Handhabungsabschnitts des Spannhebels weisende konkave Krümmung aufweist. Diese Maßnahme ermöglicht ein einfacheres Betätigen und Ausüben einer Druckkraft auf das Federelement.

Vorzugsweise kann der Handhabungsabschnitt an seinem äußeren Ende konkav geformt sein. Der Betätigungsabschnitt des Federelements kann sich vorteilhaft stirnseitig über ein freies Ende des Handhabungsabschnitts hinweg erstrecken.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: eine perspektivische Ansicht eines Gurtspanners, der gemäß einem bevorzugten Ausführungsbeispiel der vorliegenden Erfindung ausgebildet ist, in einer Verriegelungsstellung eines Spannhebels,
- Fig. 2: eine weitere perspektivische Ansicht des Gurtspanners in der Verriegelungsstellung des Spannhebels, die Einzelheiten einer Innenseite des Gurtspanners veranschaulicht,
- Fig. 3: eine perspektivische Ansicht des Gurtspanners in einer Entriegelungsstellung des Spannhebels,
- Fig. 4: eine weitere perspektivische Ansicht des Gurtspanners in der Entriegelungsstellung des Spannhebels,
- Fig. 5: eine Detailansicht, die Einzelheiten eines Federelements des Gurtspanners veranschaulicht,
- Fig. 6: eine Darstellung eines Gurtspanners, der gemäß einem zweiten Ausführungsbeispiel der vorliegenden Erfindung ausgeführt ist, in einer Entriegelungsstellung des Spannhebels,
- Fig. 7: einen Schnitt entlang einer Linie A-A gemäß Fig. 6,
- Fig. 8: eine Darstellung des Federelements des Gurtspanners gemäß Fig. 6,
- Fig. 9: eine Seitenansicht des Federelements gemäß Fig. 8.

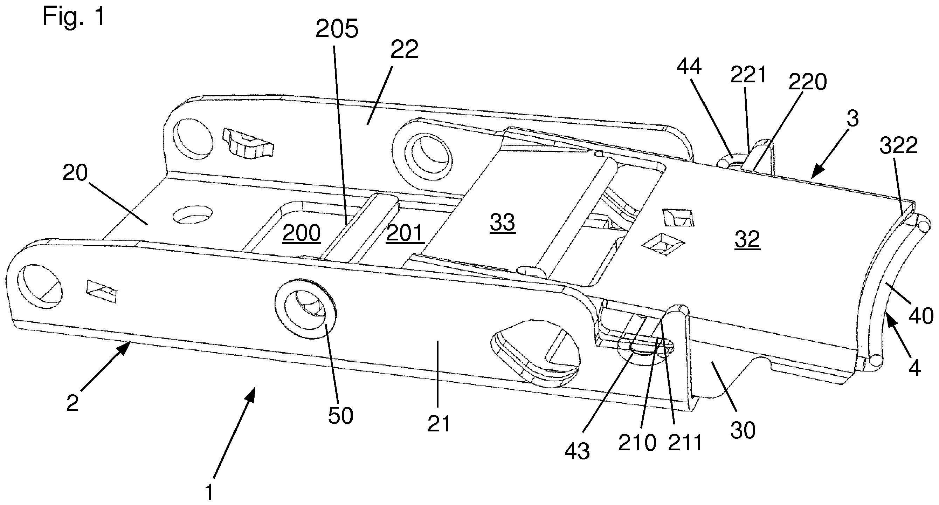

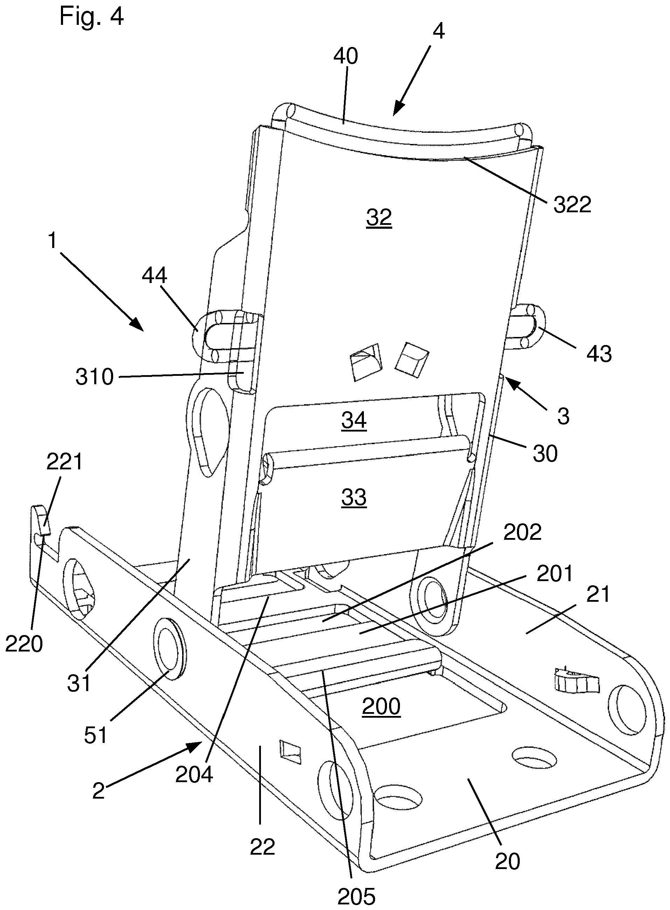

Unter Bezugnahme auf Fig. 1 bis 5 umfasst ein Gurtspanner 1, der gemäß einem ersten Ausführungsbeispiel der vorliegenden Erfindung ausgeführt ist, einen Grundkörper 2 sowie einen Spannhebel 3, der schwenkbar an dem Grundkörper 2 angelenkt ist und an diesem in der weiter unten beschriebenen Weise verriegelt werden kann. Bei dem hier gezeigten Gurtspanner 1 handelt es sich um einen so genannten Übertotpunkt-Gurtspanner, der häufig auch als "Over-Center"-Spanner bezeichnet wird.

Der Gurtspanner 1 ist zum Spannen eines hier nicht explizit dargestellten Spanngurtes geeignet. Dieser Spanngurt kann seinerseits zum Beispiel an eine Seitenplane eines Nutzfahrzeugaufbaus angeschlossen werden. Mit Hilfe einer Mehrzahl derartiger Gurtspanner 1 kann die Seitenplane in an sich bekannter Weise gegenüber einer Bodengruppe des Nutzfahrzeugaufbaus verspannt werden.

Der Grundkörper 2 ist einstückig ausgebildet und vorzugsweise aus Edelstahl hergestellt. Der Grundkörper 2 weist einen Bodenabschnitt 20 sowie eine erste und eine zweite Seitenwange 21, 22 auf, die sich parallel zueinander und im Wesentlichen orthogonal zur Ebene des Bodenabschnitts 20 erstrecken. Der Bodenabschnitt 20 und die beiden Seitenwangen 21, 22 bilden dabei eine Einfassung für den hier nicht explizit dargestellten Spanngurt.

Der schwenkbar an dem Grundkörper 2 angelenkte Spannhebel 3 ist vorzugsweise ebenfalls aus Edelstahl hergestellt und weist eine erste und eine zweite Seitenwange 30, 31 auf, die sich parallel zueinander erstrecken und zu den beiden Seitenwangen 21, 22 des Grundkörpers 2 weisen. In jeder der beiden Seitenwangen 30, 31 des Spannhebels 3 und in jeder der beiden Seitenwangen 21, 22 des Grundkörpers 2 ist jeweils eine kreisrunde Materialaussparung (nicht mit Bezugszeichen versehen) ausgebildet. Bei der Montage wird der Spannhebel 3 derart zwischen den beiden Seitenwangen 21, 22 des Grundkörpers 2 positioniert, dass die Materialaussparungen in den Seitenwangen 30, 31 des Spannhebels 3 paarweise mit den ihnen zugeordneten Materialaussparungen in den Seitenwangen 21, 22 des Grundkörpers 2 fluchten. Die drehbewegliche Befestigung des Spannhebels 3 an dem Grundkörper 2 wird in diesem Ausführungsbeispiel mittels zweier Niete 50, 51 realisiert. Ein erster Niet 50 wird bei der Montage in den miteinander fluchtenden Materialaussparungen der ersten Seitenwange 21 des Grundkörpers 2 und der ersten Seitenwange 30 des Spannhebels 3 fixiert. Ein zweiter Niet 50 wird bei der Montage in den miteinander fluchtenden Materialaussparungen der zweiten Seitenwange 22 des Grundkörpers 2 und der zweiten Seitenwange 31 des Spannhebels 3 fixiert.

In jeder der beiden Seitenwangen 30, 31 des Spannhebels 3 ist eine langlochartig geformte Durchbrechung 300, 310 ausgebildet. Ferner umfasst der Spannhebel 3 einen laschenartig ausgeführten Handhabungsabschnitt 32, an dem ein Benutzer den Spannhebel 3 zum Zwecke der Betätigung greifen kann, sowie einen Umlenksteg 33 für den Spanngurt. Aus Fig. 1 bis 4 wird deutlich, dass sich der Handhabungsabschnitt 32 und der Umlenksteg 33 zwischen den beiden Seitenwangen 30, 31 erstrecken und diese miteinander verbinden. Der Handhabungsabschnitt 32 ist in diesem Ausführungsbeispiel an einem äußeren Ende 322 konkav geformt. Wie insbesondere in Fig. 1, 3 und 4 zu erkennen, weist der Spannhebel 3 eine sich von den Anbindungspunkten an den Grundkörper 3 zum Handhabungsabschnitt 32 verringernde Aufbauhöhe auf. Vorzugsweise weist der Gurtspanner 1 eine maximale Aufbauhöhe von 20 mm auf.

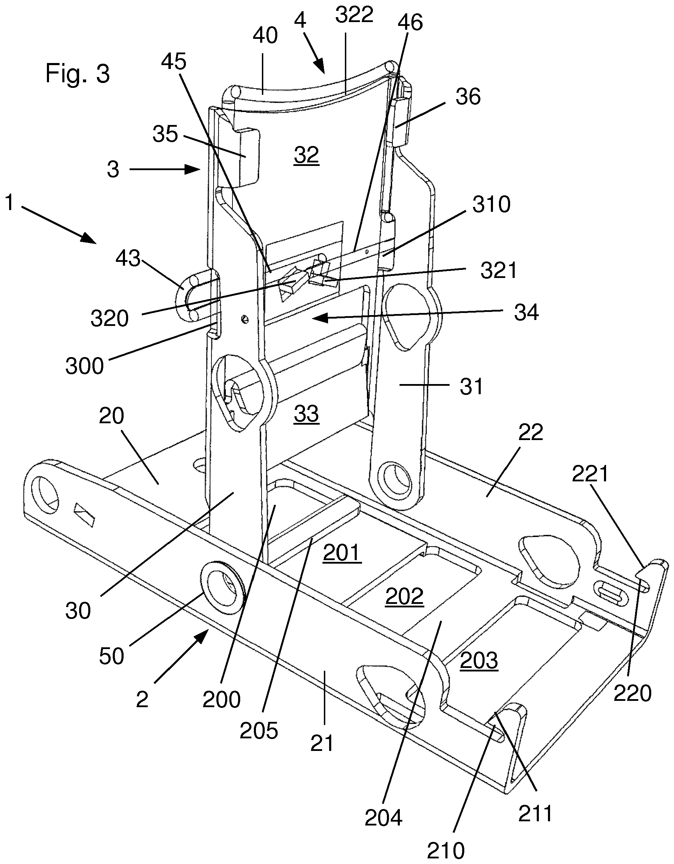

Zwischen dem Handhabungsabschnitt 32 und dem Umlenksteg 33 ist eine Gurtdurchführungsöffnung 34 ausgebildet. Durch diese Gurtdurchführungsöffnung 34 kann der Spanngurt derart hindurchgeführt werden und um den Umlenksteg 33 herumgeführt werden, dass er eine Gurtschlaufe bildet, wobei sich zwei Gurtabschnitte beidseitig um den Umlenksteg 33 herum erstrecken. Der Bodenabschnitt 20 des Grundkörpers 2 weist eine erste Gurtöffnung 200 auf, durch die die beiden Gurtabschnitte des Spanngurtes hindurchgeführt werden. In dem Bodenabschnitt 20 ist ein Umlenksteg 201 ausgebildet, um welchen die beiden Gurtabschnitte des Spanngurtes an einer Außenseite herumgeführt werden. Darüber hinaus weist der Bodenabschnitt 20 eine zweite und eine dritte Gurtöffnung 202, 203 auf, die durch einen sich zwischen den Seitenwangen 21, 22 erstreckenden Steg 204 voneinander getrennt sind. Durch jede der beiden Gurtöffnungen 202, 203 wird jeweils einer der beiden Gurtabschnitte des Spanngurtes derart hindurchgeführt, dass einer der beiden Gurtabschnitte sich oberhalb des Steges 204 und der andere der beiden Gurtabschnitte sich unterhalb des Steges 204 erstreckt. Wie insbesondere in Fig. 3 zu erkennen, weist der Umlenksteg 201 des Bodenabschnitts 2 in einem zu der ersten Gurtöffnung 200 weisenden Bereich eine Erhebung 205 auf, die eine verbesserte Sicherung des Spanngurtes in diesem Bereich bewirkt.

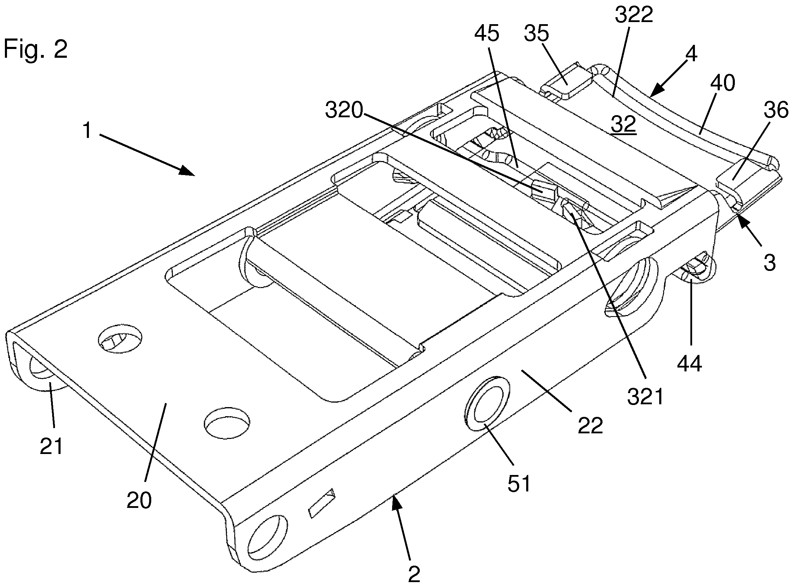

Der Gurtspanner 1 weist darüber hinaus Verriegelungsmittel auf, mit Hilfe derer der Spannhebel 3 des Gurtspanners 1 in einer geschlossenen Stellung, die in Fig. 1 und 2 dargestellt ist, an dem Grundkörper 2 verriegelt werden kann. Die Verriegelungsmittel umfassen ein einstückig ausgeführtes Federelement 4, das aus einem Draht hergestellt ist, der aus einem metallischen Werkstoff, insbesondere aus einem Federstahl, besteht. Vorzugsweise weist der Draht einen kreisrunden Querschnitt auf. Das Federelement 4 und der Spannhebel 3 sind so gestaltet, dass das Federelement 4 werkzeuglos an einer in der Verriegelungsstellung dem Bodenabschnitt 20 des Grundkörpers 2 gegenüberliegenden Innenseite des Spannhebels 5 anbringbar ist. Dadurch wird die Möglichkeit geschaffen, dass die Anbringung des Federelements 4 an dem Spannhebel 3 auch nachträglich vorgenommen werden kann. Beispielsweise können Kunden den Gurtspanner 1 ohne das Federelement 4 erwerben und das Federelement 4 bei Bedarf zu einem späteren Zeitpunkt auf einfache Weise werkzeuglos nachrüsten.

Die Verriegelungsmittel umfassen ferner eine erste und eine zweite Einrastnut 210, 220, die in den Seitenwangen 21, 22 des Grundkörpers 2 ausgebildet sind und in die das Federelement 4 in der weiter unten beschriebenen Weise in der Verriegelungsstellung rastend eingreifen kann, um dadurch den Spannhebel 3 lösbar an dem Grundkörper 2 zu verriegeln.

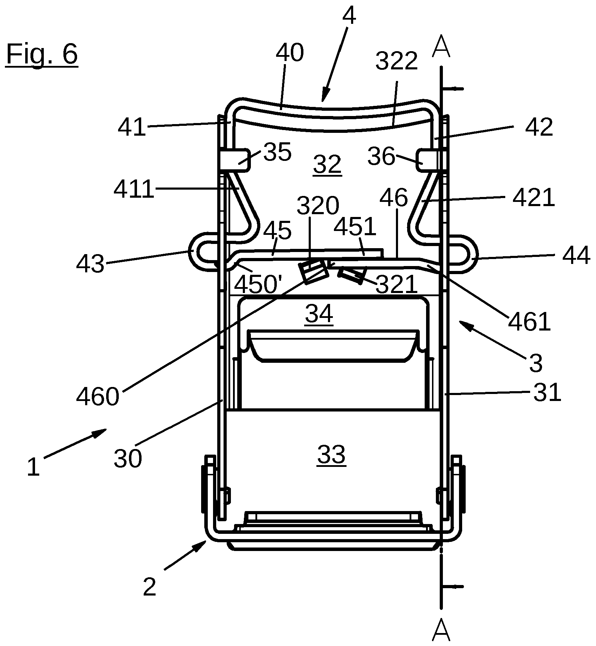

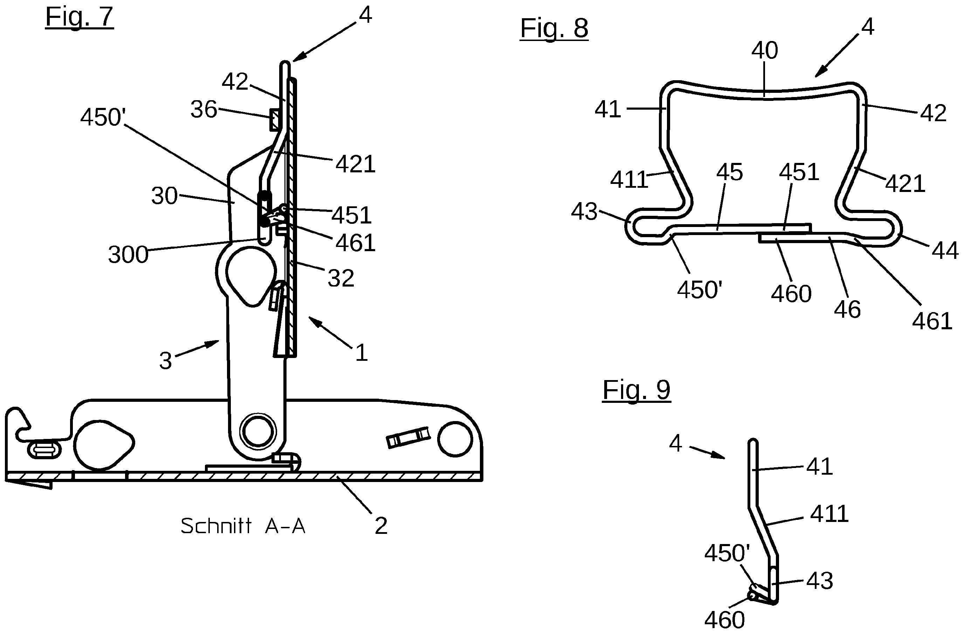

Der Gurtspanner 1, der gemäß einem zweiten Ausführungsbeispiel der vorliegenden Erfindung ausgeführt ist und der weiter unten unter Bezugnahme auf Fig. 6 bis 9 beschrieben wird, weist ebenfalls den vorstehend beschriebenen grundlegenden technischen Aufbau auf. Die beiden Gurtspanner 1 unterscheiden sich im Wesentlichen durch die unterschiedliche Gestaltung des eingesetzten Federelements 4.

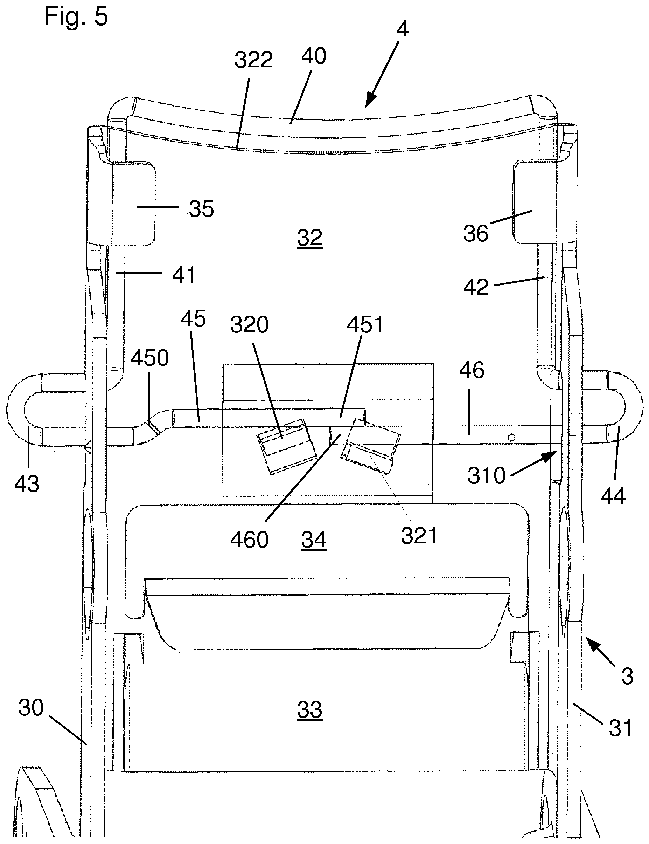

Die wesentlichen Einzelheiten des im ersten Ausführungsbeispiel verwendeten Federelements 4 sind insbesondere in Fig. 5 zu erkennen. Das Federelement 4 weist in diesem Ausführungsbeispiel eine - in Umfangsrichtung gesehen - geschlossene Form auf. Vorliegend umfasst das Federelement 4 einen Betätigungsabschnitt 40, der über das freie Ende 322 des Handhabungsabschnitts 32 hinwegragt, sowie zwei sich orthogonal zu diesem und in der Montagesolllage parallel zu den Seitenwangen 30, 31 des Spannhebels 3 erstreckende Halteabschnitte 41, 42. Der Betätigungsabschnitt 40 des Federelements 4 weist wie der Handhabungsabschnitt 32 des Spannhebels 3 eine konkave Krümmung auf, so dass sich der Betätigungsabschnitt 40 und das freie Ende 322 des Handhabungsabschnitts 32 im Wesentlichen parallel zueinander erstrecken.

An einer Innenseite des Spannhebels 3 sind seitlich zwei nach innen umgebogene Haltelaschen 35, 36 ausgebildet, in denen jeweils einer der beiden Halteabschnitte 41, 42 des Federelements 4 aufgenommen ist und darin gehalten wird. An die Halteabschnitte 41, 42 schließt sich jeweils ein Verriegelungsabschnitt 43, 44 an, der um 180° gebogen ausgebildet ist. Ein erster Verriegelungsabschnitt 43 erstreckt sich durch die langlochartige Durchbrechung 300 der ersten Seitenwange 30 des Spannhebels 3 nach außen. Ein zweiter Verriegelungsabschnitt 44 erstreckt sich durch die langlochartige Durchbrechung 310 der zweiten Seitenwange 31 des Spannhebels 3 nach außen. Ferner umfasst das Federelement 4 zwei Federschenkel 45, 46, die sich an der Innenseite des Handhabungsabschnitts 32 erstrecken. Ein erster Federschenkel 45 weist an einem an den ersten Verriegelungsabschnitt 43 angrenzenden Bereich eine Kröpfung 450 auf, die so geformt ist, dass der erste Federschenkel 45 in Längsrichtung des Handhabungsabschnitts 32 einen Versatz zum zweiten Federschenkel 46 aufweist. Dadurch wird erreicht, dass sich die beiden Federschenkel 45, 46 abschnittsweise parallel zueinander erstrecken und in einem Überlappungsbereich an ihren freien Enden 451, 460 abschnittsweise miteinander überlappen.

An der Innenseite des Handhabungsabschnitts 32 des Spannhebels 3 sind zwei Widerlager 320, 321 vorgesehen, die vorliegend integral mit dem Handhabungsabschnitt 32 ausgebildet sind und die insbesondere durch Stanzbiegen erhalten werden können. Alternativ können die beiden Widerlager 320, 321 auch separate Bauteile sein, die stoffschlüssig, insbesondere durch Verschweißen oder Verkleben, mit dem Handhabungsabschnitt 32 verbunden sind. Die Widerlager 320, 321 erstrecken sich schräg zu den Längsachsen der beiden Federschenkel 45, 46. In Längsrichtung des Handhabungsabschnitts 32 sind die beiden Widerlager 320, 321 zueinander versetzt angeordnet, so dass ein erstes Widerlager 320 mit dem ersten Federschenkel 45 zusammenwirken kann und ein zweites Widerlager 321 mit dem zweiten Federschenkel 46 zusammenwirken kann. Durch das mechanische Zusammenwirken mit den beiden Widerlagern 320, 321 wird in den beiden Federschenkeln 45, 46 eine mechanische Vorspannung erzeugt, die insbesondere auf die beiden Verriegelungsabschnitte 43, 44 wirkt. Diese mechanische Vorspannung bewirkt, dass die Verriegelungsabschnitte 43, 44 in der Entriegelungsstellung abschnittsweise an einem in Richtung des vorderen Endes 320 des Handhabungsabschnitts 32 weisenden Ende der Durchbrechung 300, 310 anliegen.

In der Verriegelungsstellung rasten die Verriegelungsabschnitte 43, 44 des Federelements 4 in die Einrastnuten 210, 220 des Grundkörpers 2 ein, so dass der Spannhebel 3 kraftschlüssig an dem Grundkörper 2 verriegelt werden kann. Durch diesen kraftschlüssigen Eingriff der Verriegelungsabschnitte 43, 44 in die ihnen zugeordneten Einrastnuten 210, 220 kann verhindert werden, dass der Spannhebel 3 in seine Öffnungsstellung überführt werden kann. Die intrinsische, durch die Federschenkel 45, 46 erzeugte mechanische Vorspannung des Federelements 4 hält die Verriegelungsabschnitte 43, 44 in den jeweiligen Einrastnuten 210, 220. Jede der beiden Seitenwangen 21, 22 des Grundkörpers 2 weist eine Schrägfläche 211, 221 auf, die jeweils an eine der beiden Einrastnuten 210, 220 angrenzt und entlang derer der jeweilige Verriegelungsabschnitt 43, 44 des Federelements 4 beim Verriegeln des Spannhebels 3 an dem Grundkörper 2 entlanggleiten kann. Dabei bewegen sich die Verriegelungsabschnitte 43, 44 entgegen der Rückstellkraft des Federelements 4 und schnappen in der Verriegelungsstellung in die Einrastnuten 210, 220 ein. Die Vorspannung des Federelements 4 sorgt dafür, dass die Verriegelungsabschnitte 43, 44 in der Verriegelungsstellung sicher in den Einrastnuten 210, 220 gehalten werden können.

Um den Spannhebel 3 bei Bedarf wieder zu entriegeln, kann ein Benutzer eine Druckkraft auf den Betätigungsabschnitt 40 des Federelements 4 ausüben. Diese Druckkraft wirkt über die Halteabschnitte 41, 42 des Federelements 4 auf die Verriegelungsabschnitte 43, 44, die sich durch die Krafteinwirkung translatorisch in den Durchbrechungen 300, 310 der Seitenwangen 30, 31 des Spannhebels 3 gegen die intrinsische Vorspannung des Federelements 4 bewegen können und dadurch außer Eingriff mit den Einrastnuten 210, 220 gebracht werden können, so dass der Spannhebel 3 gegenüber dem Grundkörper 2 in eine Öffnungsstellung geschwenkt werden kann, wie sie in Fig. 3 bis 5 gezeigt ist.

Der Gurtspanner 1 mit dem hier beschriebenen Federelement 4 ermöglicht eine besonders sichere Verriegelung mittels der beiden Verriegelungsabschnitte 43, 44 des Federelements 4, die in die ihnen zugeordneten Einrastnuten 210, 220 des Grundkörpers 2 eingreifen können. Das Entriegeln des Gurtspanners 1 kann sehr einfach und intuitiv erfolgen, indem ein Benutzer eine Druckkraft auf den Betätigungsabschnitt 40 des Federelements 4 ausübt und anschließend die Verriegelungsabschnitte 43, 44 aus den Einrastnuten 210, 220 herausführt, so dass der Spannhebel 3 in seine geöffnete Stellung geschwenkt werden kann. Mittels des Federelements 4 kann ein Verspannweg erreicht werden, der größer als die Verspannwege bei den aus dem Stand der Technik vorbekannten Gurtspannern ist. Der Verspannweg beträgt vorliegend etwa 30 mm. Bislang konnten lediglich Verspannwege von etwa 25 mm erreicht werden.

Unter Bezugnahme auf Fig. 6 bis 9 soll nachfolgend ein zweites Ausführungsbeispiel des Gurtspanners 1 näher erläutert werden. Wie weiter oben bereits erwähnt, entspricht der grundlegende Aufbau mit der Verriegelungsfunktion demjenigen des ersten Ausführungsbeispiels, so dass insoweit auf die vorherige Beschreibung verwiesen werden kann. Der Unterschied zum ersten Ausführungsbeispiel besteht in dem etwas anders gestalteten Federelement 4.

Das Federelement 4 weist in diesem Ausführungsbeispiel wiederum eine - in Umfangsrichtung betrachtet - geschlossene Form auf. Vorliegend umfasst das Federelement 4 ebenfalls einen Betätigungsabschnitt 40, der über das freie Ende 322 des Handhabungsabschnitts 32 hinwegragt, sowie zwei sich orthogonal zu diesem und in der Montagesolllage abschnittsweise parallel zu den Seitenwangen 30, 31 des Spannhebels 3 erstreckende Halteabschnitte 41, 42. Jeder dieser beiden Halteabschnitte 41, 42 weist eine Kröpfung 411, 421 auf, die sich von einer Innenseite des Handhabungsabschnitts 32 weg erstreckt und an die sich jeweils einer der um 180° umgebogenen Verriegelungsabschnitte 43, 44 anschließt. Der erste Federschenkel 45 weist an einem an den ersten Verriegelungsabschnitt 43 angrenzenden Bereich eine Kröpfung 450' auf, die in Richtung der Innenseite des Handhabungsabschnitts 32 weist und so geformt ist, dass der erste Federschenkel 45 in Längsrichtung des Handhabungsabschnitts 32 einen Versatz zum zweiten Federschenkel 46 aufweist. Der zweite Federschenkel 46 weist seinerseits eine Kröpfung 460 auf, die ebenfalls in Richtung der Innenseite des Handhabungsabschnitts 32 weist. Die beiden Federschenkel 45, 46 erstrecken sich somit wiederum abschnittsweise parallel zueinander und überlappen in einem Überlappungsbereich an ihren freien Enden 451, 460 abschnittsweise miteinander. Durch das mechanische Zusammenwirken der freien Enden 451, 460 der Federschenkel 45, 46 mit den ihnen zugeordneten Widerlagern 320, 321 wird in den beiden Federschenkeln 45, 46 wiederum eine mechanische Vorspannung erzeugt, die insbesondere auf die beiden Verriegelungsabschnitte 43, 44 wirkt. Die Kröpfungen 411, 421 der beiden Halteabschnitte 41, 42 bewirken in diesem Bereich in vorteilhafter Weise eine Beabstandung des Federelements 4 von der Innenseite des Handhabungsabschnitts 32. Durch diese Maßnahme kann in vorteilhafter Weise ein Verklemmen des Federelements 4 bei Schnee oder durch Schmutzablagerungen wirksam verhindert werden.

## Patentansprüche

1. Gurtspanner (1), umfassend
- einen Grundkörper (2) mit einem Bodenabschnitt (20) und zwei Seitenwangen (21, 22),
- einen Spannhebel (3) mit zwei Seitenwangen (30, 31), der schwenkbar an dem Grundkörper (2) angelenkt ist und durch Verschwenken aus einer Entriegelungsstellung in eine Verriegelungsstellung und umgekehrt verschwenkbar ist, sowie
- Verriegelungsmittel, die dazu eingerichtet sind, den Spannhebel (3) in der Verriegelungsstellung an dem Grundkörper (2) zu verriegeln, wobei die Verriegelungsmittel
- ein Federelement (4), das an einer in der Verriegelungsstellung zu dem Bodenabschnitt (20) weisenden Innenseite des Spannhebels (3) angeordnet ist und einen ersten Verriegelungsabschnitt (43) aufweist, der sich durch eine erste Seitenwange (30) des Spannhebels (3) nach außen erstreckt, und
- eine erste Einrastnut (210), die in einer ersten Seitenwange (21) des Grundkörpers (2) ausgebildet ist und in die der erste Verriegelungsabschnitt (43) in der Verriegelungsstellung des Spannhebels (3) eingreift und darin zum Blockieren einer Öffnungsbewegung des Spannhebels (3) durch eine mechanische Vorspannung des Federelements (4) gehalten ist,
umfassen,
wobei das Federelement (4) einen Handhabungsabschnitt (32) aufweist, der von einem Benutzer mit einer äußeren Kraft beaufschlagbar ist, so dass der erste Verriegelungsabschnitt (43) gegen die Vorspannung des Federelements (4) aus der ersten Einrastnut (210) bewegbar ist, wobei das Federelement (4) einen zweiten Verriegelungsabschnitt (44) aufweist, der sich durch eine zweite Seitenwange (31) des Spannhebels (3) nach außen erstreckt, und dass die Verriegelungsmittel eine zweite Einrastnut (220) umfassen, die in einer zweiten Seitenwange (22) des Grundkörpers (2) ausgebildet ist und in die der zweite Verriegelungsabschnitt (44) in der Verriegelungsstellung des Spannhebels (3) eingreift und darin zum Blockieren der Öffnungsbewegung des Spannhebels (3) durch die mechanische Vorspannung des Federelements (4) gehalten ist, **dadurch gekennzeichnet, dass** das Federelement (4) einen ersten und einen zweiten Federschenkel (45, 46) aufweist, die sich an der Innenseite des Handhabungsabschnitts (32) des Spannhebels (3) erstrecken, und dass an der Innenseite des Handhabungsabschnitts (32) zwei Widerlager (320, 321) vorgesehen sind, an denen jeweils einer der beiden Federschenkel (45, 46) zur Erzeugung einer mechanischen Vorspannung anliegt, wobei die Widerlager (320, 321) integral mit dem Handhabungsabschnitt (32) ausgebildet sind.

2. Gurtspanner (1) nach Anspruch 1, **dadurch gekennzeichnet, dass** in jeder der beiden Seitenwangen (30, 31) des Spannhebels (3) jeweils eine langlochartig geformte Durchbrechung (300, 310) ausgebildet ist, durch die sich jeweils einer der Verriegelungsabschnitte (43, 44) des Federelements (4) hindurch erstreckt.

3. Gurtspanner (1) nach einem der Ansprüche 1 oder 2, **dadurch gekennzeichnet, dass** das Federelement (4) in Umfangsrichtung geschlossen ausgebildet ist.

4. Gurtspanner (1) nach einem der Ansprüche 1 bis 3, **dadurch gekennzeichnet, dass** der erste Federschenkel (45) an einem an den ersten Verriegelungsabschnitt (43) angrenzenden Bereich eine Kröpfung (450) aufweist, die so geformt ist, dass der erste Federschenkel (45) in Längsrichtung des Handhabungsabschnitts (32) einen Versatz zum zweiten Federschenkel (46) aufweist und sich die beiden Federschenkel (45, 46) abschnittsweise parallel zueinander erstrecken.

5. Gurtspanner (1) nach einem der Ansprüche 1 bis 3, **dadurch gekennzeichnet, dass** das Federelement (4) zwei sich abschnittsweise parallel zu den Innenseiten der Seitenwangen (30, 31) des Spannhebels (3) erstreckende Halteabschnitte (41), 42 umfasst, wobei jeder der beiden Halteabschnitte (41, 42) eine Kröpfung (411, 421) aufweist, die sich von einer Innenseite des Handhabungsabschnitts (32) weg erstreckt und an die sich jeweils einer der Verriegelungsabschnitte (43, 44) anschließt.

6. Gurtspanner (1) nach Anspruch 5, **dadurch gekennzeichnet, dass** der erste Federschenkel (45) an einem an den ersten Verriegelungsabschnitt (43) angrenzenden Bereich eine Kröpfung (450') aufweist, die sich in Richtung der Innenseite des Handhabungsabschnitts (32) erstreckt und so geformt ist, dass der erste Federschenkel (45) in Längsrichtung des Handhabungsabschnitts (32) einen Versatz zum zweiten Federschenkel (46) aufweist.

7. Gurtspanner (1) nach einem der Ansprüche 5 oder 6, **dadurch gekennzeichnet, dass** der zweite Federschenkel (46) an einem an den zweiten Verriegelungsabschnitt (44) angrenzenden Bereich eine Kröpfung (460) aufweist, die sich in Richtung der Innenseite des Handhabungsabschnitts (32) erstreckt.

8. Gurtspanner (1) nach einem der vorgenannten Ansprüche, **dadurch gekennzeichnet, dass** die Federschenkel (45, 46) in einem Überlappungsbereich an ihren freien Enden (451, 460) abschnittsweise miteinander überlappen.

9. Gurtspanner (1) nach einem der vorgenannten Ansprüche, **dadurch gekennzeichnet, dass** die Widerlager (320, 321) separate Bauteile sind, die stoffschlüssig, insbesondere durch Verschweißen oder Verkleben, mit dem Handhabungsabschnitt (32) verbunden sind.

10. Gurtspanner (1) nach einem der vorgenannten Ansprüche, **dadurch gekennzeichnet, dass** die beiden Widerlager (320, 321) in Längsrichtung des Handhabungsabschnitts (32) zueinander versetzt angeordnet sind, so dass ein erstes Widerlager (320) mit dem ersten Federschenkel (45) zusammenwirken kann und ein zweites Widerlager (321) mit dem zweiten Federschenkel (46) zusammenwirken kann.

11. Gurtspanner (1) nach einem der vorgenannten Ansprüche, **dadurch gekennzeichnet, dass** sich die Widerlager (320, 321) schräg zu den Längsachsen der beiden Federschenkel (45, 46) erstrecken.

12. Gurtspanner (1) nach einem der vorgenannten Ansprüche, **dadurch gekennzeichnet, dass** ein Betätigungsabschnitt (40) des Federelements (4) eine in Richtung des Handhabungsabschnitts (32) des Spannhebels (3) weisende konkave Krümmung aufweist.

13. Gurtspanner (1) nach einem der vorgenannten Ansprüche, **dadurch gekennzeichnet, dass** der Handhabungsabschnitt (32) an seinem äußeren Ende (322) konkav geformt ist.

## Claims

1. Belt tensioner (1) comprising
- a base body (2) having a bottom portion (20) and two side walls (21, 22),
- a tension lever (3) with two side walls (30, 31), which is pivotably articulated on the base body (2) and can be pivoted by pivoting from an unlocking position into a locking position and vice versa as well as
- locking means, which are adapted to lock the tension lever (3) in the locking position on the base body (2),
wherein the locking means comprise
- a spring element (4), which is arranged on the inner side of the tension lever (3) pointing to the bottom portion (20) in the locking position and has a first locking portion (43), which extends outwardly through a first side wall (30) of the tension lever (3) and
- a first hooking groove (210), which is formed in a first side wall (21) of the base body (2) and in which the first locking portion (43) in the locking position of the tension lever (3) engages and is held therein for blocking an opening movement of the tension lever (3) by a mechanic prestress of the spring element (4),
wherein the spring element (4) has a handling portion (32), to which an external force can be applied by a user, so that the first locking portion (43) can be moved against the prestress of the spring element (4) from the first hooking groove (210),
wherein the spring element (4) has a second locking portion (44), which extends outwardly through a second side wall (31) of the tension lever (3) and the locking means comprise a second hooking groove (220), which is formed in a second side wall (22) of the base body (2) and in which the second locking portion (44) engages in the locking position of the tension lever (3) and is held therein for blocking the opening movement of the tension lever (3) by the mechanical prestress of the spring element (4), **characterised in that** the spring element (4) has a first and a second spring leg (45, 46), which extend on the inner side of the handling portion (32) of the tension lever (3) and that on the inner side of the handling portion (32) two counter bearings (320, 321) are provided, on which one of the two spring legs (45, 46), respectively, abuts in order to create a mechanical prestress, wherein the counter bearings (320, 321) are integrally formed with the handling portion (32).

2. Belt tensioner (1) according to claim 1, **characterised in that** in each of the two side walls (30, 31) of the tension lever (3) a slot hole-like through hole (300, 310) is respectively formed, through which one of the locking portions (43, 44) of the spring element (4), respectively, extends.

3. Belt tensioner (1) according to one of claims 1 or 2, **characterised in that** the spring element (4) is of closed construction in a circumferential direction.

4. Belt tensioner (1) according to one of claims 1 to 3, **characterised in that** the first spring leg (45) has a crank (450) at the area adjacent to the first locking portion (43), which is formed in such a manner that the first spring leg (45) has an offset relative to the second spring leg (46) in the longitudinal direction of the handling portion (32) and the two spring legs (45, 46) extend in sections parallel to one another.

5. Belt tensioner (1) according to one of claims 1 to 3, **characterised in that** the spring element (4) comprises two holding sections (41) extending in sections parallel to the inner sides of the side walls (30, 31) of the tension lever (3), wherein each of the two holding sections (41, 42) has a crank (411, 421), which extends away from one inner side of the handling portion (32) and which is followed by one of the locking portions (43, 44), respectively.

6. Belt tensioner (1) according to claim 5, **characterised in that** the first spring leg (45) has a crank (450') at an area adjacent to the first locking portion (43), which extends in the direction of the inner side of the handling portion (32) and is formed in such a manner that the first spring leg (45) has an offset to the second spring leg (46) in the longitudinal direction of the handling portion (32).

7. Belt tensioner (1) according to one of claims 5 or 6, **characterised in that** the second spring leg (46) has a crank (460) at the area adjacent to the second locking portion (44), which extends in the direction of the inner side of the handling portion (32).

8. Belt tensioner (1) according to one of the previous claims, **characterised in that** the spring legs (45, 46) overlap each other in sections in an overlapping area on their free ends (451, 460).

9. Belt tensioner (1) according to one of the previous claims, **characterised in that** the counter bearings (320, 321) are separate components, which are integrally connected to the handling portion (32), in particular by welding or bonding.

10. Belt tensioner (1) according to one of the previous claims, **characterised in that** the two counter bearings (320, 321) are arranged offset to one another in the longitudinal direction of the handling portion (32), so that a first counter bearing (320) can cooperate with the first spring leg (45) and a second counter bearing (321) can cooperate with the second spring leg (46).

11. Belt tensioner (1) according to one of the previous claims, **characterised in that** the counter bearings (320, 321) extend obliquely to the longitudinal axes of the two spring legs (45, 46).

12. Belt tensioner (1) according to one of the previous claims, **characterised in that** an actuating portion (40) of the spring element (4) has a concave curvature pointing in the direction of the handling portion (32) of the tension lever (3).

13. Belt tensioner (1) according to one of the previous claims, **characterised in that** the handling portion (32) is concavely shaped on its outer end (322).

## Revendications

1. Tendeur (1) de sangle, comprenant
- un corps de base (2) avec un segment de fond (20) et deux parois latérales (21, 22),
- un levier de tensionnement (3) avec deux parois latérales (30, 31), levier qui est articulé contre le corps de base (2) et qu'il est possible de faire pivoter d'une position de déverrouillage vers une position de verrouillage et inversement, ainsi que des
- moyens de verrouillage configurés pour verrouiller le levier de tensionnement (3) en position de verrouillage contre le corps de base (2), sachant que les moyens de verrouillage comprennent
- un élément ressort (4), disposé contre un côté intérieur - regardant le segment de fond (20) en position de verrouillage - du levier de tensionnement (3) et présentant un premier segment de verrouillage (43) qui s'étend vers l'extérieur à travers une première paroi latérale (30) du levier de tensionnement (3), et
- une première gorge de crantage (210) configurée dans une première paroi latérale (21) du corps de base (2) et dans laquelle le premier segment de verrouillage (43) pénètre, lorsque le levier de tensionnement (3) se trouve en position de verrouillage, et est retenu dedans pour bloquer un mouvement d'ouverture du levier de tensionnement (3) par une précontrainte mécanique de l'élément ressort (4),
sachant que l'élément ressort (4) présente un segment à manier (32) auquel un utilisateur peut imprimer une force externe de sorte à déplacer le premier segment de verrouillage (43) pour lui faire quitter la première gorge de crantage (210) en vainquant la précontrainte de l'élément ressort (4),
sachant que l'élément ressort (4) présente un seconde segment de verrouillage (44) s'étendant vers l'extérieur à travers une seconde paroi latérale (31) du levier de tensionnement (3), et que les moyens de verrouillage comprennent une seconde gorge de crantage (220) configurée dans une seconde paroi latérale (22) du corps de base (2) et dans laquelle le second segment de verrouillage (44) pénètre, lorsque le levier de tensionnement (3) se trouve en position de verrouillage, et est retenu dedans pour bloquer le mouvement d'ouverture du levier de tensionnement (3) par la précontrainte mécanique de l'élément ressort (4),
**caractérisé en ce que** l'élément ressort (4) présente une première et une seconde branches (45, 46) qui s'étendent contre le côté intérieur du segment à manier (32) du levier de tensionnement (3),
et **en ce que** sur le côté intérieur du segment à manier (32) sont prévus deux paliers antagonistes (320, 321) contre lesquels applique respectivement l'une des deux branches (45, 46) du ressort pour générer une précontrainte mécanique,
sachant que les paliers antagonistes (320, 321) sont intégralement configurés avec le segment à manier (32).

2. Tendeur (1) de sangle selon la revendication 1, **caractérisé en ce que** dans chacune des deux parois latérales (30, 31) du levier de tensionnement (3) est configuré un passage (300, 310) de forme oblongue à travers lequel s'étend l'un des segments de verrouillage (43, 44) de l'élément ressort (4).

3. Tendeur (1) de sangle selon l'une des revendications 1 ou 2, **caractérisé en ce que** l'élément ressort (4) est configuré fermé dans le sens de son périmètre.

4. Tendeur (1) de sangle selon l'une des revendications 1 à 3, **caractérisé en ce que** la première branche (45) du ressort présente un coude (450) sur une zone limitrophe du premier segment de verrouillage (43), coude formé de telle sorte que la première branche (45) du ressort présente, dans le sens longitudinal du segment à manier (32), un décalage par rapport à la seconde branche (46) du ressort, et **en ce que** des segments des deux branches (45, 46) du ressort s'étendent parallèlement l'un à l'autre.

5. Tendeur (1) de sangle selon l'une des revendications 1 à 3, **caractérisé en ce que** l'élément ressort (4) comprend deux segments de retenue (41, 42) s'étendant en segments parallèlement aux côtés intérieurs des parois latérales (30, 31) du levier de tensionnement (3), sachant que chacun des deux segments de retenue (41, 42) présente un coude (411, 421) qui s'étend en direction opposée d'un côté intérieur du segment à manier (32) et auquel se raccorde respectivement l'un des segments de verrouillage (43, 44).

6. Tendeur (1) de sangle selon la revendication 5, **caractérisé en ce que** la première branche (45) du ressort présente un coude (450') sur une zone limitrophe du premier segment de verrouillage (43), coude qui s'étend en direction du côté intérieur du segment à manier (32) et dont la géométrie est telle que la première branche (45) du ressort présente, dans le sens longitudinal du segment à manier (32), un décalage par rapport à la seconde branche (46) du ressort.

7. Tendeur (1) de sangle selon la revendication 5 ou 6, **caractérisé en ce que** la seconde branche (46) du ressort présente un coude (460) sur une zone limitrophe du seconde segment de verrouillage (44), coude qui s'étend en direction du côté intérieur du segment à manier (32).

8. Tendeur (1) de sangle selon l'une des revendications précédentes, **caractérisé en ce que** des segments des branches (45, 46) du ressort se chevauchent mutuellement dans une zone de chevauchement au niveau de leurs extrémités libres (451, 460).

9. Tendeur (1) de sangle selon l'une des revendications précédentes, **caractérisé en ce que** les paliers antagonistes (320, 321) sont des composants séparés qui sont reliés par adhérence de matières, en particulier par soudage ou collage, avec le segment à manier (32).

10. Tendeur (1) de sangle selon l'une des revendications précédentes, **caractérisé en ce que** les deux paliers antagonistes (320, 321) sont disposés décalés l'un par rapport à l'autre dans le sens longitudinal du segment à manier (32), de sorte qu'un premier palier antagoniste (320) peut interagir avec la première branche (45) du ressort et qu'un seconde palier antagoniste (321) peut interagir avec la seconde branche (46) du ressort.

11. Tendeur (1) de sangle selon l'une des revendications précédentes, **caractérisé en ce que** les paliers antagonistes (320, 321) s'étendent en biais par rapport aux axes longitudinaux des deux branches (45, 46) du ressort.

12. Tendeur (1) de sangle selon l'une des revendications précédentes, **caractérisé en ce qu'**un segment d'actionnement (40) de l'élément ressort (4) présente une courbure concave en direction du segment à manier (32) du levier de tensionnement (3).

13. Tendeur (1) de sangle selon l'une des revendications précédentes, **caractérisé en ce que** le segment à manier (32) est de forme concave en son extrémité externe (322).
